# FASCICULE DE BREVET EUROPEEN

(11) **EP 1 139 002 B1**
(45) Date de publication et mention de la délivrance du brevet: **05.10.2005**
(21) Numéro de dépôt: 01420058.8
(22) Date de dépôt: 06.03.2001
(51) Int. Cl.: F16L 37/084

(54) **Procédé de déconnexion d'une extrémité de conduite hors d'un raccord et dispositif de raccordement correspondant**
Verfahren zur Trennung eines Rohrendes von einer Kupplung und Anschlussvorrichtung hierfür
Method for disconnecting the end of conduit from a connector and connecting device therefor

(30) Priorité: 30.03.2000 FR 0004073; 14.04.2000 FR 0004876
(43) Date de publication de la demande: 04.10.2001
(73) Titulaire: COMAP société anonyme, F-69008 Lyon (FR); LEGRIS S.A., F-35000 Rennes (FR)
(72) Inventeur: Le Quere, Philippe, 35830 Betton (FR); Tuffe, Stéphane, 69740 Genas (FR); Sellier, Marc, 45450 Donnery (FR)
(74) Mandataire: Maureau, Philippe

(56) Documents cités:
- DE-A- 4 304 241
- US-A- 4 593 943

## Description

La présente invention concerne un procédé de déconnexion d'une extrémité de conduite hors d'un raccord ou similaire et un dispositif de raccordement correspondant.

On connaît des raccords qui comportent une partie de liaison à un élément d'un circuit conducteur de fluide sous pression (conduite de fluide, réservoir, pompe, ...) et un manchon tubulaire de liaison à la conduite ayant une extrémité solidaire de la partie de liaison à l'élément et une extrémité opposée libre par laquelle l'extrémité de conduite est destinée à être introduite dans le manchon tubulaire. Le manchon tubulaire est généralement pourvu d'un joint torique assurant l'étanchéité du raccordement à l'extrémité de la conduite et de moyens de retenue de l'extrémité de conduite dans le manchon tubulaire.

Les moyens de retenue sont généralement constitués par une bague d'accrochage présentant des dents d'accrochage inclinées, disposée entre le joint et l'extrémité libre du manchon. Les dents sont déformables entre une position de retenue dans laquelle les dents sont en saillie à l'intérieur du manchon tubulaire pour mordre dans la surface extérieure de la conduite et une position de dégagement dans laquelle les dents sont déformées pour être radialement écartées de la conduite. Un moyen de déconnexion est couramment prévu sous la forme d'un poussoir reçu à coulissement dans l'extrémité libre du manchon tubulaire et dont une extrémité est conformée pour venir s'intercaler entre les dents et la conduite et les écarter de celle-ci.

Afin d'obtenir une étanchéité et une résistance mécanique suffisantes du raccordement, il est nécessaire que la conduite soit reçue dans le manchon tubulaire avec un jeu minimum. Pour cette raison, le manchon tubulaire comprend de part et d'autre du joint d'étanchéité et des dents déformables, donc à chacune de ses extrémités, une section de guidage de la conduite. La section de guidage adjacente à l'extrémité libre du manchon tubulaire est en pratique formée par le poussoir. Cependant, le poussoir est monté avec jeu dans l'extrémité libre du manchon tubulaire de manière à permettre son coulissement, il en résulte une relative faiblesse du guidage de la conduite à ce niveau qui peut débattre dans le manchon tubulaire, ce qui risque de provoquer une dégradation de l'étanchéité et/ou de la résistance du raccordement.

Pour limiter ce risque, la section de guidage adjacente à l'extrémité du manchon tubulaire opposée à l'extrémité libre de celui-ci est relativement longue, au détriment de l'encombrement du raccord, contrairement aux exigences de compacité des installations ayant cours actuellement.

On a également pensé à fixer dans l'extrémité libre du manchon tubulaire, par clipsage indémontable au sertissage, une douille de guidage comportant une partie cannelée et recevant à coulissement un poussoir crénelé. Le guidage de l'extrémité de conduite est alors assuré par les parties en saillie des cannelures, tandis que la déformation des dents est réalisée par les parties crénelées du poussoir reçues dans les parties creuses des cannelures de la douille de guidage. Un inconvénient d'une telle réalisation réside dans le fait que lors de la déconnexion, seules les dents se trouvant en regard de parties crénelées sont déformées. Il existe donc un risque que des dents restent au moins partiellement en prise sur l'extrémité de conduite lors du retrait de celle-ci et occasionnent des rayures de cette extrémité qui pourront devenir une source de fuite lors d'une connexion ultérieure de l'extrémité de conduite.

Le document DE-A-4 304 241 décrit un dispositif de raccordement comportant un corps dans lequel est disposée une bague d'accrochage maintenue par une douille de guidage. A l'intérieur de la douille de guidage peut être montée une bague de déconnexion susceptible d'agir sur la bague d'accrochage, par action sur son extrémité extérieure, en présence même de la douille de guidage.

La présente invention a alors pour but de fournir un procédé de déconnexion et un dispositif de connexion correspondant assurant un raccordement efficace d'une extrémité de conduite à un élément tout en permettant une déconnexion aisée de l'extrémité de conduite. Ce procédé et ce dispositif de raccordement pourront avantageusement être mis en oeuvre facilement et à coût réduit.

A cet effet, le procédé qu'elle propose est un procédé de déconnexion d'une extrémité de conduite introduite dans un dispositif de raccordement comportant un corps dans lequel est disposée une bague d'accrochage munie de dents d'accrochage et maintenue dans le corps par une douille de guidage.

Selon l'invention, ce procédé comporte les étapes suivantes :
- retrait de la douille qui est amovible,
- mise en place sur l'extrémité de conduite, à la place de la douille de guidage, d'une bague de déconnexion dont une face frontale est conformée de manière à pouvoir pénétrer dans le corps du dispositif de raccordement et coopérer avec les dents de la bague d'accrochage pour permettre l'inclinaison de celles-ci,
- poussée de la bague de déconnexion vers le corps du dispositif de raccordement comme pour la mettre en position sur le corps entraînant ainsi la bague de déconnexion vers la bague d'accrochage, et
- action de la face frontale de la bague de déconnexion sur les dents de la bague d'accrochage.

Il est possible, pour mettre en oeuvre ce procédé, de ne prévoir qu'un jeu réduit entre la douille de guidage et l'extrémité de conduite connectée. Ceci autorise donc un guidage précis de cette extrémité. De même, ce procédé permet d'avoir un dispositif de raccordement d'encombrement réduit puisque l'outil de déconnexion est extérieur et n'est rapporté que lorsqu'une déconnexion est souhaitée.

De préférence, la douille de guidage est vissée dans le corps du dispositif de raccordement.

Pour réaliser une liaison entre la bague de déconnexion et la douille de guidage la première vient par exemple s'encliqueter sur la seconde lorsqu'elle est poussée vers la bague d'accrochage.

La présente invention concerne également un dispositif de raccordement pour la mise en oeuvre d'un procédé tel que décrit ci-dessus. Ce dispositif comporte un corps dans lequel est disposé un joint d'étanchéité, une entretoise, une bague d'accrochage ainsi qu'une douille de guidage disposée à une extrémité libre du corps destinée à recevoir une extrémité de conduite et destinée à maintenir en place le joint, l'entretoise et la bague d'accrochage.

Selon l'invention, il comporte en outre une bague de déconnexion dont une face frontale est conformée de manière à pouvoir pénétrer dans le corps du dispositif de raccordement à la place de la douille de guidage, après retrait de celle-ci, et à coopérer avec les dents de la bague d'accrochage pour permettre l'inclinaison de celles-ci.

Dans une forme de réalisation préférée, la douille de guidage présente un filetage extérieur destiné à coopérer avec un taraudage correspondant réalisé dans le corps du dispositif.

Pour permettre la mise en place de la bague de déconnexion sur l'extrémité de la conduite connectée, cette bague est par exemple une bague fendue déformable élastiquement.

Afin de faciliter le vissage et le dévissage de la douille de guidage, celle-ci présente avantageusement une face externe destinée à rester en dehors du corps du dispositif de raccordement et présentant des moyens destinés à coopérer avec un outil pour permettre la mise en place et le retrait de la douille. Dans ce cas, on peut prévoir que les moyens destinés à la coopération avec un outil sont des encoches régulièrement répartie à la périphérie de la surface externe.

Dans une forme de réalisation avantageuse, la douille de guidage et la bague de déconnexion comportent des moyens d'encliquetage complémentaires.

De toute façon, l'invention sera bien comprise à l'aide de la description qui suit, en référence au dessin schématique annexé, représentant à titre d'exemples deux formes de réalisation d'un dispositif de raccordement selon l'invention et illustrant deux procédés de déconnexion correspondants.
Figure 1 est une vue en coupe longitudinale d'un premier dispositif de raccordement selon l'invention, sans sa bague de déconnexion,
Figure 2 est une vue de face d'une bague de déconnexion,
Figure 3 est une vue analogue à la figure 1, présentant une
étape d'un procédé selon l'invention, le dispositif de raccordement étant équipé de la bague de déconnexion,
Figure 4 est une vue analogue à la figure 3 pour une autre étape du procédé,
Figure 5 est une vue en perspective éclatée des éléments des figures 3 et 4,
Figure 6 est une vue correspondant à la figure 3 pour un deuxième mode de réalisation de l'invention, et
Figure 7 est une vue correspondant à la figure 5 pour le deuxième mode de réalisation de l'invention.

En référence aux figures, le dispositif de raccordement selon l'invention est destiné au raccordement d'une extrémité de conduite 2 à un élément d'un circuit conducteur de fluide sous pression. Cet élément non représenté peut être un organe émetteur ou récepteur de fluide tel qu'une autre extrémité de conduite, une pompe, un réservoir ou autre.

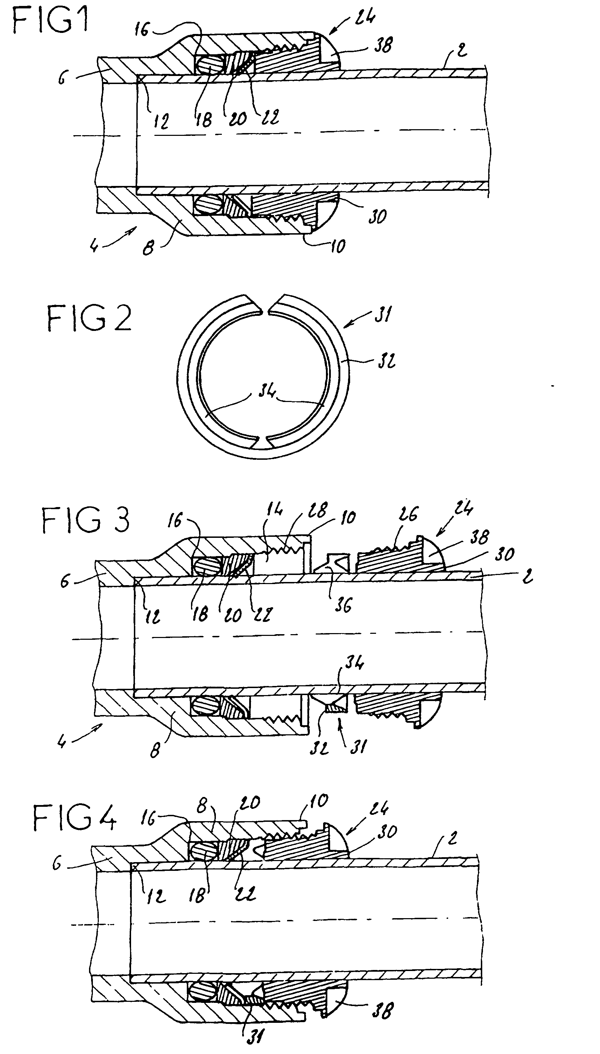

En référence à la figure 1, le dispositif de raccordement comprend un corps 4 comportant une partie de liaison 6 à l'élément et un manchon tubulaire 8 de liaison à l'extrémité de conduite 2. La partie de liaison 6 peut par exemple porter un manchon tubulaire identique au manchon tubulaire 8 ou une partie de l'élément à connecter.

Le manchon tubulaire 8 est solidaire de la partie de liaison 6 et son extrémité 10 libre est destinée à recevoir l'extrémité de conduite 2. Un épaulement annulaire 12 contre lequel l'extrémité de conduite 2 est destiné à venir en butée est prévu à l'intérieur du corps 4.

Le manchon tubulaire 8 comprend un logement interne 14 de diamètre supérieur au diamètre externe de l'extrémité de la conduite 2 s'étendant à partir de l'extrémité libre 10 et se raccordant à la partie de liaison 6 par un épaulement 16 annulaire. A partir de l'épaulement 16, sont disposés dans le logement 14 un joint torique 18, une entretoise 20, une bague d'accrochage 22 et une douille de guidage 24.

La bague d'accrochage 22 est d'un type connu. Elle comporte une couronne annulaire périphérique et des dents s'étendant radialement vers l'intérieur de la couronne et inclinées axialement. Le montage du joint 18, de l'entretoise 20 et de la bague d'accrochage est connu de l'homme du métier et correspond au montage classique d'un dispositif de raccordement appelé aussi raccord rapide.

La douille de guidage 24 a un diamètre interne sensiblement égal au diamètre externe de l'extrémité de conduite 2. La bague d'accrochage 22 est maintenue contre l'entretoise 20 par la douille de guidage 24 qui présente extérieurement un filetage 26 coopérant avec un taraudage 28 correspondant réalisé à l'extrémité libre 10 du corps 4. La douille de guidage 24 a alors une face frontale en appui contre la bague d'accrochage 22 et une face arrière 30 opposée situé du côté de l'extrémité libre 10 du corps 4. La douille de guidage 24 assure ainsi, outre une fonction de guidage de l'extrémité de conduite 2 dans le manchon tubulaire 8, une fonction de blocage de la bague d'accrochage 22. La retenue de l'extrémité de conduite 2 est assurée par les dents de la bague d'accrochage 22 qui grâce à leur inclinaison vers l'intérieur du corps 4 fléchissent lors de l'introduction de l'extrémité de conduite dans le manchon tubulaire 8 et s'arc-boutent si une traction est exercée sur cette extrémité de conduite 2 dans le sens d'une déconnexion, empêchant ainsi le retrait de cette extrémité de conduite 2.

Il est toutefois possible de retirer l'extrémité de conduite 2 du corps 4 à l'aide d'une bague de déconnexion 31 qui est décrite ci-après en mettant en oeuvre un procédé selon l'invention.

Les figures 3 à 5 illustrent une première variante d'un procédé de déconnexion selon l'invention en utilisant un dispositif de raccordement tel que représenté sur la figure 1 et une bague de déconnexion 31 telle que représentée sur la figure 2.

La bague de déconnexion 31 se présente sous la forme d'une bague fendue et est par exemple réalisée en matière synthétique moulée par injection, ou décolletée. Elle comporte un anneau fendu 32 de diamètre extérieur sensiblement égal au diamètre extérieur de l'entretoise 20. Cet anneau fendu 32 porte sur sa face intérieure deux demi anneaux 34 de section triangulaire isocèle. La base du triangle isocèle est destinée à épouser la surface extérieure de l'extrémité de conduite 2 tandis que le sommet opposé à la base est relié à l'anneau fendu 32. L'anneau fendu 32 s'étend axialement d'un côté seulement du sommet du triangle opposé à la base du triangle. Ainsi, du côté opposé, chaque demi anneau 34 présente un ergot 36 destiné à venir coopérer avec les dents de la bague d'accrochage 22. L'ergot 36 fait saillie axialement par rapport à l'anneau fendu 32.

La déconnexion de l'extrémité de conduite 2 est alors réalisée par exemple conformément au procédé décrit ci-après. La figure 1 montre l'extrémité de conduite 2 en position connectée dans le dispositif de raccordement. Les dents de la bague d'accrochage 22 viennent mordre la surface externe de cette extrémité de conduite et retiennent celle-ci tandis que la douille de guidage 24 retient la bague d'accrochage en place dans son logement 14.

Pour déconnecter la conduite 2, la douille de guidage 24 est tout d'abord retirée par dévissage du manchon tubulaire 8. Des encoches 38 sont prévues sur la face arrière 30 de la douille de guidage 24 pour faciliter son dévissage. Il est alors possible, avec un outil adapté non représenté au dessin, de venir en prise dans les encoches 38 pour fait tourner la douille de guidage 24. Une fois la douille de guidage 24 dévissée et retirée du manchon tubulaire 8, la bague de déconnexion 31 est placée sur l'extrémité de conduite 2 de manière que les ergots 36 se trouvent du côté du corps 4 (figure 3). La bague de déconnexion 31 s'engage facilement grâce à l'élasticité du matériau utilisé pour sa réalisation. La douille de guidage 24 est alors poussée axialement vers le corps 4, entraînant avec elle la bague de déconnexion 31. Le filetage 26 de la douille de guidage 24 vient alors en prise avec le taraudage 28 correspondant. Avec le même outil que celui ayant servi à dévisser la douille de guidage 24, on vient revisser celle-ci sur le corps 4. Les ergots 36 font alors fléchir les dents de la bague d'accrochage de telle sorte que celles-ci ne mordent alors plus la surface externe de la conduite 2, permettant ainsi la déconnexion de l'extrémité de conduite 2 sans causer de dommages.

Une fois l'extrémité de conduite 2 retirée, il suffit de retirer la bague de déconnexion 31 et de remettre en place la douille de guidage 24 en la vissant dans le taraudage 28 pour obtenir un dispositif de raccordement capable de raccorder une nouvelle extrémité de conduite ou bien celle déjà utilisée.

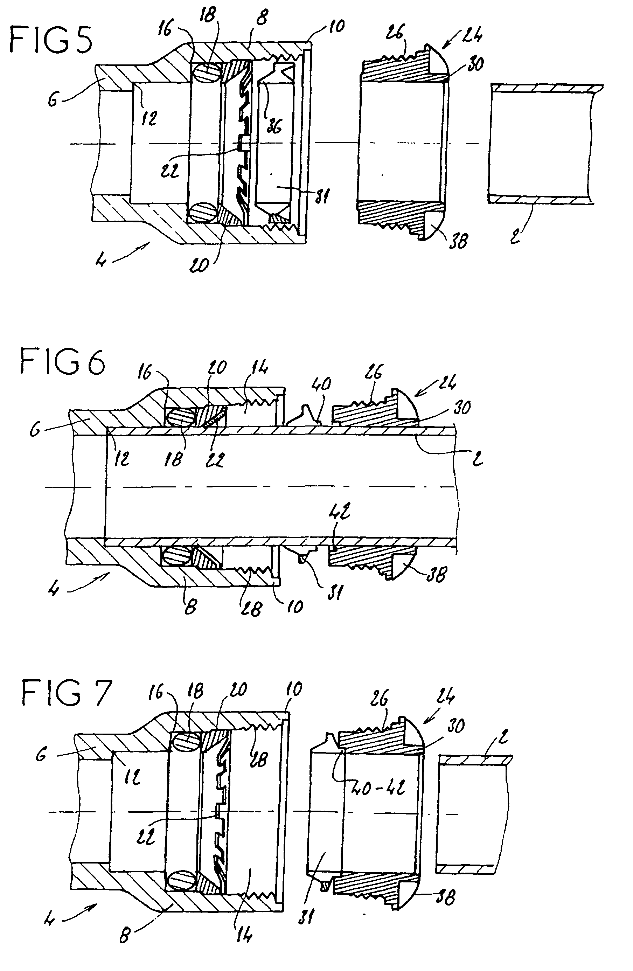

Les figures 6 et 7 présentent une variante de réalisation du dispositif de raccordement décrit ci-dessus. Les mêmes références sont utilisées sur ces figures pour désigner des éléments semblables.

La différence entre ce second mode de réalisation et le premier est qu'il est prévu un encliquetage de la bague de déconnexion 31 sur la douille de guidage 24 lors de l'introduction de la bague de déconnexion 31 dans le manchon tubulaire 8. Ainsi, après déconnexion de l'extrémité de conduite 2, la bague de déconnexion 31 reste sur la douille de guidage 24 alors que selon le premier mode de réalisation, il y a un risque pour que la bague de déconnexion, après retrait de l'extrémité de conduite 2, reste dans le logement 14 du manchon tubulaire 8.

Dans cette variante de réalisation, la bague de déconnexion 31 présente du côté opposé aux ergots 36, une nervure annulaire 40 s'tendant axialement et présentant une surface extérieure légèrement conique. La douille de guidage 24 présente quant à elle une rainure annulaire 42 correspondante présentant également une surface conique de manière à permettre un encliquetage lorsque la douille de guidage 24 vient pousser la bague de déconnexion 31 dans le logement 14.

Par rapport au procédé de déconnexion décrit ci-dessus, le seul changement est que l'on réalise un encliquetage de la bague de déconnexion 31 sur la douille de guidage 24 avant de réaliser la déconnexion. Après la déconnexion, la bague de déconnexion 31 reste solidaire de la douille de guidage 24 jusqu'au retrait par l'opérateur de la bague de déconnexion.

## Revendications

1. Procédé de déconnexion d'une extrémité de conduite (2) introduite dans un dispositif de raccordement comportant un corps (4) dans lequel est disposée une bague d'accrochage (22) munie de dents d'accrochage et maintenue dans le corps par une douille de guidage (24),
**caractérisé en ce qu'**il comporte les étapes suivantes :
- retrait de la douille (24) qui est amovible,
- mise en place sur l'extrémité de conduite, à la place de la douille de guidage, d'une bague de déconnexion (31) dont une face frontale (36) est conformée de manière à pouvoir pénétrer dans le corps du dispositif de raccordement et coopérer avec les dents de la bague d'accrochage (22) pour permettre l'inclinaison de celles-ci,
- poussée de la bague de déconnexion (31) vers le corps (4) du dispositif de raccordement comme pour la mettre en position sur le corps entraînant ainsi la bague de déconnexion (31) vers la bague d'accrochage (22), et
- action de la face frontale (36) de la bague de déconnexion (31) sur les dents de la bague d'accrochage (22).

2. Procédé selon la revendication 1, **caractérisé en ce que** la douille de guidage (31) est vissée dans le corps (4) du dispositif de raccordement.

3. Procédé selon l'une des revendications 1 ou 2, **caractérisé en ce que** la bague de déconnexion (31) vient s'encliqueter sur la douille de guidage (24) lorsqu'elle est poussée vers la bague d'accrochage (22).

4. Dispositif de raccordement pour la mise en oeuvre d'un procédé selon l'une des revendications 1 à 3 et comportant un corps (4) dans lequel est disposé joint d'étanchéité (18), une entretoise (20), une bague d'accrochage (22) ainsi qu'une douille de guidage (24) disposée à une extrémité libre (10) du corps, destinée à recevoir une extrémité de conduite (2) et destinée à maintenir en place le joint (18), l'entretoise (20) et la bague d'accrochage (22),
**caractérisé en ce que** la douille de guidage (24) est amovible, et **en ce qu'**il comporte en outre une bague de déconnexion (31) dont une face frontale (36) est conformée de manière à pouvoir pénétrer dans le corps du dispositif de raccordement à la place de la douille de guidage (24), après retrait de celle-ci, et à coopérer avec les dents de la bague d'accrochage (22) pour permettre l'inclinaison de celles-ci.

5. Dispositif de raccordement selon la revendication 4, **caractérisé en ce que** la douille de guidage (24) présente un filetage (26) destiné à coopérer avec un taraudage (28) correspondant réalisé dans le corps (4) du dispositif.

6. Dispositif de raccordement selon l'une des revendications 4 ou 5, **caractérisé en ce que** la bague de déconnexion (31) est une bague fendue déformable élastiquement.

7. Dispositif de raccordement selon l'une des revendications 4 à 6, **caractérisé en ce que** la douille de guidage (24) présente une face externe (30) destinée à rester en dehors du corps du dispositif de racccordement et présentant des moyens (38) destinés à coopérer avec un outil pour permettre la mise en place et le retrait de la douille (24).

8. Dispositif de raccordement selon la revendication 7, **caractérisé en ce que** les moyens destinés à la coopération avec un outil sont des encoches (38) régulièrement répartie à la périphérie de la surface externe (30).

9. Dispositif de raccordement selon l'une des revendications 4 à 8, **caractérisé en ce que** la douille de guidage (24) et la bague de déconnexion (31) comportent des moyens d'encliquetage complémentaires (40,42).

## Patentansprüche

1. Verfahren zum Trennen der Verbindung eines Leitungsendes (2), das in eine Anschlussvorrichtung mit einem Körper (4) eingeführt ist, in dem ein Haltering (22) angeordnet ist, der mit Haltezähnen versehen und durch eine Führungsbuchse (24) im Körper gehalten ist,
**dadurch gekennzeichnet, dass** es die folgenden Schritte umfasst:
- Zurückziehen der Buchse (24), die abnehmbar ist,
- Anbringen am Ende der Leitung, an der Stelle der Führungsbuchse, eines Trennrings (31), von dem eine Stirnseite (36) so angepasst ist, dass sie in den Körper der Anschlussvorrichtung eindringen und mit den Zähnen des Halterings (22) zusammenwirken kann, um diese sich neigen zu lassen,
- Schieben des Trennrings (31) zum Körper (4) der Anschlussvorrichtung, um ihn am Körper in Position zu bringen, wodurch der Trennring (31) zum Haltering (22) mitgenommen wird, und
- Einwirken der Stirnseite (36) des Trennrings (31) auf die Zähne des Halterings (22).

2. Verfahren nach Anspruch 1, **dadurch gekennzeichnet, dass** die Führungsbuchse (31) in den Körper (4) der Anschlussvorrichtung eingeschraubt ist.

3. Verfahren nach Anspruch 1 oder 2, **dadurch gekennzeichnet, dass** der Trennring (31) an der Führungsbuchse (24) einrastet, wenn sie zum Haltering (22) geschoben wird.

4. Anschlussvorrichtung zum Durchführen eines Verfahrens nach einem der Ansprüche 1 bis 3, einen Körper (4) umfassend, in dem ein Dichtungselement (18), ein Abstandshalter (20), ein Haltering (22) sowie eine an einem freien Ende (10) des Körpers befindliche Führungsbuchse (24) angeordnet ist, die dazu bestimmt ist, ein Ende der Leitung (2) aufzunehmen, und dazu bestimmt ist, die Dichtung (18), den Abstandshalter (20) und den Haltering (22) an Ort und Stelle zu halten,
**dadurch gekennzeichnet, dass** die Führungsbuchse (24) abnehmbar ist und die Vorrichtung darüber hinaus einen Trennring (31) umfasst, von dem eine Stirnseite (36) so angepasst ist, dass sie in den Körper der Anschlussvorrichtung anstelle der Führungsbuchse (24) nach deren Entnahme eindringen und mit den Zähnen des Halterings (22) zusammenwirken kann, um diese sich neigen zu lassen.

5. Anschlussvorrichtung nach Anspruch 4, **dadurch gekennzeichnet, dass** die Führungsbuchse (24) ein Außengewinde (26) aufweist, das dazu bestimmt ist, mit einem entsprechenden Innengewinde (28) zusammenzuwirken, das im Körper (4) der Vorrichtung ausgebildet ist.

6. Anschlussvorrichtung nach einem der Ansprüche 4 oder 5, **dadurch gekennzeichnet, dass** der Trennring (31) ein elastisch verformbarer, geschlitzter Ring ist.

7. Anschlussvorrichtung nach einem der Ansprüche 4 bis 6, **dadurch gekennzeichnet, dass** die Führungsbuchse (24) eine Außenfläche (30) aufweist, die dazu bestimmt ist, außerhalb des Körpers der Anschlussvorrichtung zu bleiben, und Einrichtungen (38) aufweist, die dazu bestimmt sind, mit einem Werkzeug zusammenzuwirken, um das Anbringen und Zurückziehen der Buchse (24) zuzulassen.

8. Anschlussvorrichtung nach Anspruch 7, **dadurch gekennzeichnet, dass** die Einrichtungen, die zum Zusammenwirken mit einem Werkzeug bestimmt sind, auf dem Umfang der Außenfläche (30) gleichmäßig verteilte Ausklinkungen (38) sind.

9. Anschlussvorrichtung nach einem der Ansprüche 4 bis 8, **dadurch gekennzeichnet, dass** die Führungsbuchse (24) und der Trennring (31) komplementäre Einrasteinrichtungen (40, 42) umfassen.

## Claims

1. Method of disconnecting the end of a pipe (2) which has been introduced into a connecting device having a body (4) in which there is disposed a coupling ring (22) which is provided with coupling teeth and is held in position in the body by a guide socket (24),
**characterised in that** said method entails the following stages:
- the withdrawing of the socket (24), which is removable;
- the placing in position on the end of the pipe, instead of the guide socket, of a disconnecting ring (31), one end face (36) of which is shaped in such a way as to be able to penetrate into the body of the connecting device and cooperate with the teeth of the coupling ring (22) in order to permit inclination of the said teeth;
- the pushing of the disconnecting ring (31) towards the body (4) of the connecting device as if to place it in position on the body, thus taking the disconnecting ring (31) with it towards the coupling ring (22); and
- the acting of the front face (36) of the disconnecting ring (31) on the teeth of the coupling ring (22).

2. Method according to claim 1, **characterised in that** the guide socket (31) is screwed into the body (4) of the connecting device.

3. Method according to one of claims 1 or 2, **characterised in that** the disconnecting ring (31) latches onto the guide socket (24) when it is pushed towards the coupling ring (22).

4. Connecting device for implementing a method according to one of claims 1 to 3 and having a body (4) in which there are disposed a seal (18), a distance-piece (20), a coupling ring (22) and also a guide socket (24) which is disposed at an open end (10) of the body intended to receive the end of a pipe (2), and is intended to hold the seal (18), the distance-piece (20) and the coupling ring (22) in position, **characterised in that** the guide socket (24) is removable, and **in that** said device also comprises a disconnecting ring (31), one end face (36) of which is shaped so as to be able to penetrate into the body of the connecting device instead of the guide socket (24), after the withdrawal of the latter, and to cooperate with the teeth of the coupling ring (22) in order to permit their inclination.

5. Connecting device according to claim 4, **characterised in that** the guide socket (24) has a thread (26) which is intended to cooperate with a corresponding tapping (28) produced in the body (4) of the device.

6. Connecting device according to one of claims 4 or 5, **characterised in that** the disconnecting ring (31) is an elastically deformable split ring.

7. Connecting device according to one of claims 4 to 6, **characterised in that** the guide socket (24) has an outer face (30) which is intended to remain outside the body of the connecting device and has means (38) which are intended to cooperate with a tool in order to permit the placing in position and withdrawal of the socket (24).

8. Connecting device according to claim 7, **characterised in that** the means which are intended for cooperation with a tool are notches (38) which are regularly distributed at the periphery of the outer surface (30).

9. Connecting device according to one of claims 4 to 8, **characterised in that** the guide socket (24) and the disconnecting ring (31) have complementary latching means (40, 42).
